# EUROPÄISCHE PATENTSCHRIFT

(11) **EP 3 429 909 B1**
(45) Veröffentlichungstag und Bekanntmachung des Hinweises auf die Patenterteilung: **13.01.2021**
(21) Anmeldenummer: 17712081.3
(22) Anmeldetag: 17.03.2017
(51) Int. Cl.: B62D 29/00, B29C 44/18

(54) **DÄMMELEMENT**
BAFFLE
ÉLÉMENT D'ISOLATION

(30) Priorität: 18.03.2016 EP 16161238
(43) Veröffentlichungstag der Anmeldung: 23.01.2019
(73) Patentinhaber: Sika Technology AG, 6340 Baar (CH)
(72) Erfinder: MICHALAK, Piotr, 8953 Dietikon (CH); RICHTER, Steffen, 8952 Schlieren (CH)
(74) Vertreter: Sika Patent Attorneys
(86) Internationale Anmeldenummer: PCT/EP2017/056347
(87) Internationale Veröffentlichungsnummer: WO 2017/158143

(56) Entgegenhaltungen:
- EP-A1- 1 591 224
- US-A1- 2005 285 292
- US-A1- 2011 192 675
- US-B1- 6 413 611
- US-B2- 8 920 900

## Beschreibung

Die Erfindung betrifft ein Dämmelement mit einem Trägerelement und einem expandierbaren Material, insbesondere zur Dämmung eines Strukturelements mit einem Hohlraum in einem Fahrzeug. Sie betrifft des Weiteren ein System mit einem Strukturelement und einem darin angeordneten Dämmelement.

Vielfach weisen Bauelemente, wie beispielsweise Karosserien und/oder Rahmen von Transport- und Fortbewegungsmitteln, insbesondere von Fahrzeugen zu Wasser oder zu Land oder von Luftfahrzeugen, Strukturen mit Hohlräumen auf, um leichtgewichtige Konstruktionen zu ermöglichen. Diese Hohlräume verursachen jedoch verschiedenste Probleme. Je nach Art des Hohlraumes muss dieser zum Verhindern des Eindringens von Feuchtigkeit und Verschmutzungen, die zur Korrosion der Bauelemente führen können, abgedichtet werden. Oft ist es auch wünschenswert, die Hohlräume und somit das Bauelement wesentlich zu verstärken, jedoch das geringe Gewicht beizubehalten. Oft ist es auch notwendig, die Hohlräume und somit die Bauelemente zu stabilisieren, um Geräusche, die sonst den Hohlraum entlang oder durch diesen hindurch übertragen werden würden, zu reduzieren. Viele dieser Hohlräume weisen eine unregelmässige Form oder ein enges Ausmass auf, wodurch es erschwert wird, sie richtig abzudichten, zu verstärken und zu dämpfen.

Insbesondere im Automobilbau, aber auch im Flugzeug- und Bootsbau, werden deshalb Abdichtungselemente (Englisch: baffle) verwendet, um Hohlräume abzudichten und/ oder akustisch abzuschotten, oder Verstärkungselemente (Englisch: reinforcer) verwendet, um Hohlräume zu verstärken.

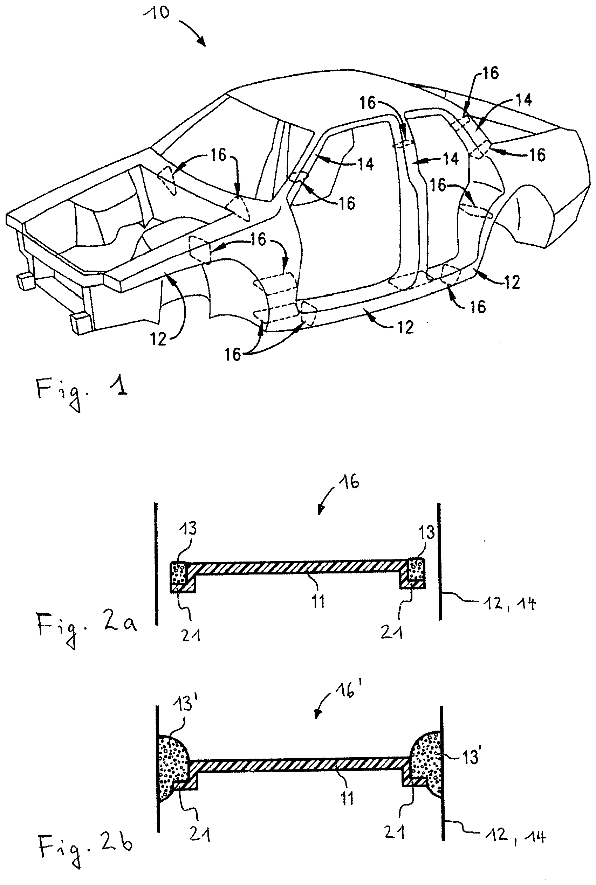

In Fig. 1 ist eine Karosserie eines Automobils schematisch dargestellt. Die Karosserie 10 weist dabei verschiedene Strukturen mit Hohlräumen, wie beispielsweise Säulen 14 und Träger bzw. Verstrebungen 12 auf. Solche Strukturelemente 12, 14 mit Hohlräumen werden üblicherweise mit Abdichtungs- und/oder Verstärkungselementen 16 abgedichtet bzw. verstärkt.

Fig. 2a und 2b zeigen schematisch ein bekanntes Konzept zum abdichtenden und/oder verstärkenden Verschluss von Öffnungen bzw. Hohlräumen in einem Kraftfahrzeug. Dabei zeigt die Fig. 2a ein Dämmelement 16 vor einer Expansion eines expandierbaren Materials 13. Fig. 2b zeigt dasselbe Dämmelement 16, jedoch nach einer Expansion des expandierbaren Materials 13, also mit dem expandierten Material 13'.

Das Dämmelement 16 befindet sich in einem Hohlraum einer Karosseriestruktur, wie sie beispielsweise in Fig. 1 dargestellt ist. Ein Abschnitt eines solchen Strukturelements 12, 14 einer Karosserie ist in den Fig. 2a und 2b schematisch dargestellt. Das Dämmelement 16 umfasst ein Trägerelement 11, welches einen Randbereich 21 hat. Das expandierbare Material 13 ist dabei im Wesentlichen auf diesem Randbereich 21 des Trägerelementes 11 angeordnet.

Vor der Expansion des expandierbaren Materials 13 besteht zwischen dem Dämmelement 16 und dem Strukturelement 12, 14 ein Spalt. Dieser Spalt erlaubt es, das Strukturelement 12, 14 zu beschichten, um einen Korrosionsschutz des Strukturelementes 12, 14 zu erreichen. Nach dieser Beschichtung wird das expandierbare Material 13 üblicherweise durch eine Wärmeeinwirkung expandiert, wobei das expandierte Material 13' dadurch den Spalt zwischen dem Dämmelement 16 und dem Strukturelement 12, 14 schliesst. Zudem wird durch die Expansion des expandierbaren Materials 13 auch zugleich eine Fixierung des Dämmelementes 16 im Strukturelement 12, 14 erreicht. Ein derart im Strukturelement 12, 14 befestigtes Dämmelement 16 verstärkt einerseits das Strukturelement 12, 14 und verschliesst andererseits den Hohlraum im Strukturelement 12, 14.

Nachteilig an solchen Dämmelementen 16 ist es, dass für jede Ausführungsform eines Strukturelementes 12, 14 ein individuell angepasstes Dämmelement 16 angefertigt werden muss. Dies ist insbesondere deshalb notwendig, weil ein Spalt zwischen Dämmelement 16 und Strukturelement 12, 14 einerseits genügend gross sein muss, um eine möglichst gute Beschichtung des Strukturelementes 12, 14 vor Expansion des expandierbaren Materials 13 zu ermöglichen, und andererseits darf dieser Spalt aber nicht zu gross sein, damit das expandierbare Material 13 durch die Expansion diesen Spalt überwinden kann und zuverlässig und vollständig dämmen kann. Somit muss das Dämmelement genau an das jeweilige Strukturelement angepasst sein, um eine gewünschte Spaltbreite zu erreichen. Solche individuell angefertigten Dämmelemente für jede Form von Strukturelementen sind jedoch teuer und aufwendig. Beispielsweise müssen für verschiedene Karosserievarianten ein und desselben Automobilmodells verschiedene Dämmelemente angefertigt werden, um eine zuverlässige Dämmung der unterschiedlichen Strukturelemente 12, 14 zu erhalten.

In US 8 920 900 B2 ist ein Hohlraum Füller offenbart. Dieser umfasst expandierbares Material auf einem Träger, wobei das expandierbare Material eine Kante bildet welche über den Rand des Trägers hinausragt. Dieses Dokument offenbart den Oberbegriff des unabhängigen Anspruchs 1.

Der Erfindung liegt daher die Aufgabe zugrunde, ein verbessertes Dämmelement der oben erläuterten Art bereitzustellen, welches für verschiedene Strukturelemente einsetzbar ist.
Diese Aufgabe wird gelöst durch ein Dämmelement zur Dämmung eines Strukturelementes in einem Fahrzeug, das Dämmelement umfassend ein Trägerelement mit einem Randbereich und ein expandierbares Material, welches zumindest auf dem Randbereich auf dem Trägerelement angeordnet ist. Dabei ragt das expandierbare Material in zumindest eine Richtung über den Randbereich des Trägerelementes hinaus, so dass das expandierbare Material in diese zumindest eine Richtung einen flexiblen Überstand bildet.
Diese Lösung hat den Vorteil, dass dadurch mit einem einzigen Dämmelement mehrere verschieden geformte bzw. dimensionierte Strukturelemente gedämmt werden können. Dadurch können Kosten sowohl bei der Entwicklung des Dämmelementes als auch bei der Logistik im Automobilbau eingespart werden, indem beispielsweise ein und dasselbe Dämmelement in verschiedenen Karosserievarianten eines Automobilmodelles eingesetzt werden kann.

Ein Kerngedanke der vorliegenden Erfindung besteht darin, dass der flexible Überstand des expandierbaren Materials sich an unterschiedliche Strukturelemente anpassen kann. Durch die flexible Ausgestaltung dieses Überstandes wird der Überstand in engeren Strukturelementen stärker verbogen und in weiteren Strukturelementen weniger stark verbogen. Wesentlich dabei ist es, dass das expandierbare Material nach der Expansion den Spalt zwischen Trägerelement und Strukturelement vollständig verschliesst.

Die Bezeichnung "Dämmelement" umfasst im Zusammenhang mit dieser Erfindung Elemente zur Abschottung und/oder Verstärkung und/oder Dämmung eines Strukturelementes. Diese verschiedenen Eigenschaften eines solchen Dämmelementes können dabei einzeln oder in Kombination auftreten.

In einer beispielhaften Ausführungsform beträgt eine Länge des Überstandes, gemessen entlang einer Ebene des Trägerelementes, zwischen und 5 und 50 mm, bevorzugt zwischen 5 und 30 mm, besonders bevorzugt zwischen 10 und 20 mm.

Eine solche Dimensionierung des Überstandes hat den Vorteil, dass dadurch verschiedene Strukturelemente von Karosserievarianten mit Abmessungsunterschieden von bis zu einigen Zentimetern mit einem einzigen Typ eines Dämmelement abgedeckt werden können. Gleichzeitig wird dennoch eine sichere Befestigung des Dämmelementes in der Karosserie erreicht, da der Abstand zwischen Karosserie und Trägerelement dadurch nicht zu gross ist.

In einer beispielhaften Ausführungsform beträgt eine Dicke des Überstandes, gemessen senkrecht zur Ebene des Trägerelementes, zwischen 2 und 20 mm, bevorzugt zwischen 3 und 15 mm, besonders bevorzugt zwischen 3 und 10 mm.

Eine solche Dimensionierung des Überstandes hat den Vorteil, dass einerseits genügend expandierbares Material zur Verfügung gestellt wird, um den Spalt zwischen Träger und Strukturelement zuverlässig zu schliessen, und andererseits wird gleichzeitig eine genügend grosse Flexibilität des Überstandes erreicht, so dass sich der Überstand flexibel an verschiedene Hohlräume bzw. Strukturelemente anpassen kann.

Erfindungsgemäß hat das Trägerelement zumindest eine Rippe, welche sich in diese zumindest eine Richtung vom Randbereich des Trägerelementes erstreckt, sodass die zumindest eine Rippe den flexiblen Überstand abstützt.

Eine solche Rippe bietet den Vorteil, dass der flexible Überstand an vorgesehenen Stellen zusätzlich abgestützt werden kann. Solche vorgesehenen Stellen können beispielsweise Orte sein, an welchen der flexibel Überstand die Tendenz aufweist, in einem expandierten Zustand des expandierbaren Materiales durchzuhängen oder abzusacken. Durch das Vorsehen von einer oder mehrerer solcher Rippen kann ein solches Durchhängen bzw. Absacken des flexiblen Überstandes verhindert werden.

In einer vorteilhaften Weiterbildung erstreckt sich die zumindest eine Rippe um eine kleinere Distanz in diese zumindest eine Richtung vom Randbereich des Trägerelementes, als das expandierbare Material in diese zumindest eine Richtung über den Randbereich des Trägerelementes hinausragt.

In einer weiteren vorteilhaften Weiterbildung hat das Trägerelement mehrere Rippen zur Abstützung des flexiblen Überstandes. Dabei können sich diese mehreren Rippen in dieselbe oder in verschiedene Richtungen vom Randbereich des Trägerelementes erstrecken. Zudem können diese mehreren Rippen nebeneinander oder aber einzeln vorgesehen sein.

In einer weiteren vorteilhaften Weiterbildung beträgt eine Länge der Rippe, gemessen entlang einer Ebene des Trägerelementes und entlang dieser zumindest einen Richtung, zwischen und 4 und 40 mm, bevorzugt zwischen 5 und 25 mm, besonders bevorzugt zwischen 10 und 18 mm.

In einer weiteren vorteilhaften Weiterbildung beträgt eine Breite der Rippe, gemessen entlang einer Ebene des Trägerelementes und quer zu dieser zumindest einen Richtung, zwischen und 2 und 50 mm, bevorzugt zwischen 2 und 30 mm, besonders bevorzugt zwischen 2 und 15 mm.

In einer beispielhaften Ausführungsform erstreckt sich der Überstand im Wesentlichen in der Ebene des Trägerelementes. In einem alternativen Ausführungsbeispiel erstreckt sich der Überstand in einer Ebene, welche einen Winkel zur Ebene des Trägerelementes bildet. In einer beispielhaften Weiterbildung beträgt dieser Winkel zwischen 10 und 80°, bevorzugt zwischen 20 und 70°, besonders bevorzugt zwischen 30 und 60°.

Je nach Einsatzgebiet kann eine andere Ausführungsvariante bevorzugt werden. Beispielsweise kann es für sehr flexible Überstände ausreichend sein, dass sich der Überstand in der Ebene des Trägerelementes erstreckt. Durch die sehr hohe Flexibilität kann ein solcher Überstand einfach in die gewünschte Position im Strukturelement gebogen werden. Bei etwas weniger flexiblen Überständen kann es hingegen vorteilhaft sein, wenn der Überstand bereits vor der Montage in einem Strukturelement angewinkelt ist. Dies hat den Vorteil, dass solch angewinkelte Überstände weniger gebogen werden müssen, um die Bestimmungsposition im Strukturelement zu erlangen. Weiterhin kann je nach Querschnitt oder Material des expandierbaren Materials eine vorteilhafte Geometrie gewählt werden, um eine dem Einsatzzweck entsprechende Flexibilität des Überstandes zu erreichen.

In einer beispielhaften Ausführungsform hat der Überstand einen rechteckigen, einen trapezförmigen, einen dreieckigen, einen unregelmässig geformten, einen konvexen oder einen konkaven Querschnitt.

Auch hier kann je nach Einsatzgebiet des Dämmelementes ein vorteilhafter Querschnitt des Überstandes gewählt werden. Wiederum können beispielsweise für sehr flexible expandierbare Materialien Überstände in einem rechteckigen Querschnitt ausgebildet werden, und für etwas weniger flexible expandierbare Materialien können in einem spitz zusammenlaufenden trapezförmigen Querschnitte bzw. dreieckige Querschnitte ausgebildet werden.

In einer beispielhaften Ausführungsform erstreckt sich der Überstand in einer Achse senkrecht zur Ebene des Trägerelementes nur oberhalb des Randbereichs, über welchen der Überstand hinausragt.

Ein derart ausgebildeter Überstand bietet einerseits Vorteile bei der Produktion des Dämmelementes und andererseits lassen sich derart ausgebildete Überstände bei einer Montage in das Strukturelement einfacher handhaben.

In einer beispielhaften Ausführungsform hat der Überstand zumindest einen Vorsprung zur Abstützung am Strukturelement.

Ein solcher Vorsprung bietet den Vorteil, dass der Überstand auf einer möglichst kleinen Fläche am Strukturelement abgestützt werden kann. Dadurch kann vor der Expansion des expandierbaren Materials das Strukturelement möglichst vollständig beschichtet werden. In einer Weiterbildung können mehrere solcher Vorsprünge vorgesehen sein. Dadurch kann der Überstand über einen breiteren Bereich stabiler am Strukturelement abgestützt werden.

In einer beispielhaften Weiterbildung ist der Vorsprung als bogenförmige Ausbuchtung ausgebildet. Dies hat den Vorteil, dass sich der Vorsprung und das Strukturelement im Wesentlichen nur an einem Punkt berühren, indem das Strukturelement tangential an der bogenförmigen Ausbuchtung des Vorsprungs anliegt. Dadurch kann eine möglichst vollständige Beschichtung des Strukturelementes vor der Expansion des expandierbaren Materials erreicht werden.

Weiterhin wird ein System mit einem Strukturelement und einem darin angeordneten Dämmelement gemäss obiger Beschreibung vorgeschlagen.

In einer beispielhaften Ausführungsform stützt sich der flexible Überstand des Dämmelementes an zumindest einer Stelle am Strukturelement ab, wobei der Überstand dadurch verbogen ist.

Dies hat den Vorteil, dass dadurch unterschiedliche Varianten von Strukturelementen mit einem einzigen Dämmelement gedämmt werden können, wobei sich das expandierbare Material dank dem flexiblen Überstand durch dessen Verbiegung ideal an die jeweiligen Gegebenheiten des Strukturelementes anpasst.

In einer beispielhaften Ausführungsform hat der Überstand zumindest einen Vorsprung zur Abstützung am Strukturelement, wobei der Überstand nur über diesen Vorsprung am Strukturelement abgestützt ist.

Dies hat den Vorteil, dass dadurch ein Spalt zwischen dem expandierbaren Material vor Expansion und dem Strukturelement möglichst vollständig erhalten bleibt, wodurch eine möglichst gute Beschichtung des Strukturelementes ermöglicht wird.

In einer vorteilhaften Weiterbildung ist eine Berührung zwischen Vorsprung und Strukturelement im Wesentlichen tangential oder punktuell. Dies hat den Vorteil, dass dadurch eine vom expandierbaren Material bedeckte Fläche des Strukturelementes vor Expansion möglichst klein gehalten wird, so dass das Strukturelement möglichst vollständig beschichtet werden kann.

In einer beispielhaften Ausführungsform beträgt ein Spalt zwischen Überstand und Strukturelement in einem Bereich, in welchem der Überstand nicht am Strukturelement abgestützt ist, zwischen 1 und 5 mm, bevorzugt zwischen 2 und 4 mm. Dadurch wird gewährleistet, dass einerseits die Beschichtungsflüssigkeit durch diesen Spalt hindurchfliessen kann, und andererseits wird dadurch sichergestellt, dass durch die Expansion des expandierbaren Materials eine zuverlässige Verbindung zwischen Strukturelement und Trägerelement erreicht wird.

Einzelheiten und Vorteile der Erfindung werden im Folgenden anhand von Ausführungsbeispielen und mit Bezug auf schematische Zeichnungen beschrieben. Es zeigen:
- Fig. 1: eine beispielhafte Darstellung einer Karosserie gemäss Stand der Technik;
- Fig. 2a und 2b: schematische Darstellungen zur Erläuterung eines beispielhaften Dämmelementes gemäss Stand der Technik;
- Fig. 3a bis 3d: schematische Darstellung eines beispielhaften Dämmelementes, sowie ein System mit einem Strukturelement und einem darin eingesetzten solchen Dämmelement;
- Fig. 4a bis 4d: schematische Darstellungen von verschiedenen Ausführungsformen eines Überstandes des expandierbaren Materials;
- Fig. 5a bis 5c: schematische Darstellungen eines Systems mit einem Strukturelement und einem darin eingesetzten Dämmelement; und
- Fig. 6a und 6b: schematische Darstellung eines Systems mit einem Strukturelement und einem darin eingesetzten Dämmelement.

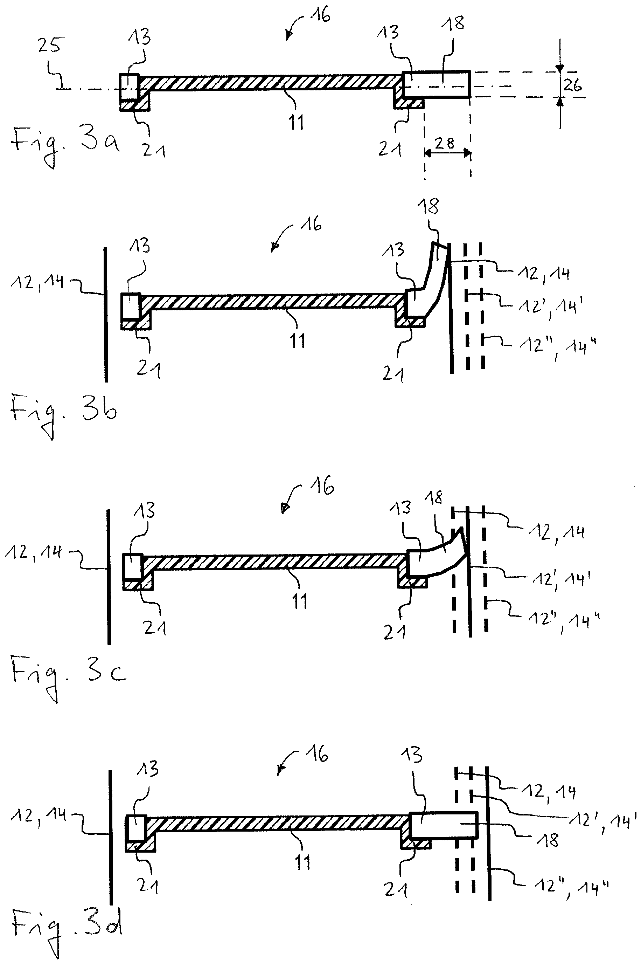

In Fig. 3a ist ein beispielhaftes Dämmelement 16 dargestellt. Das Dämmelement 16 hat ein Trägerelement 11 und ein darauf angeordnetes expandierbares Material 13. In diesem Ausführungsbeispiel ist das expandierbare Material 13 im Wesentlichen auf Randbereichen 21 des Trägerelementes 11 angeordnet. Das expandierbare Material 13 ragt in zumindest einer Richtung über den Randbereich 21 des Trägerelementes 11 hinaus, so dass das expandierbare Material 13 in diese zumindest eine Richtung einen flexiblen Überstand 18 bildet. Dieser Überstand 18 hat, gemessen entlang einer Ebene 25 des Trägerelementes 11, eine Länge 28. Zudem hat dieser Überstand 18, gemessen senkrecht zur Ebene 25 des Trägerelementes 11, eine Dicke 26. In diesem Ausführungsbeispiel beträgt die Länge 28 des Überstandes 18 ungefähr 12 mm und die Dicke 26 des Überstandes 18 beträgt ungefähr 6 mm.

In diesem Ausführungsbeispiel gemäss Fig. 3a sind lediglich Randbereiche 21 des Trägerelementes 11 mit expandierbarem Material 13 bedeckt. In einem alternativen, nicht dargestellten Ausführungsbeispiel können auch weitere und/oder andere Bereiche des Trägers 11 mit expandierbarem Material 13 bedeckt sein.

Im Ausführungsbeispiel gemäss Fig. 3a erstreckt sich der flexible Überstand lediglich in eine Richtung. In einem nicht dargestellten alternativen Ausführungsbeispiel können mehrere solcher Überstände 18 ausgebildet sein, wobei diese mehreren Überstände 18 in eine oder mehrere Richtungen über das Trägerelement 11 bzw. dessen Randbereich 21 hinausragen können.

In den Fig. 3b, 3c und 3d ist das beispielhafte Dämmelement 16 aus Fig. 3a eingesetzt in einem Strukturelement 12, 14 dargestellt. Dabei ist das Dämmelement 16 in Fig. 3b in einer ersten Variante des Strukturelementes 12, 14 eingesetzt, in Fig. 3c ist dasselbe Dämmelement 16 in einer zweiten Variante des Strukturelementes 12', 14' dargestellt, und in Fig. 3d ist dasselbe Dämmelement 16 in einer dritten Variante des Strukturelementes 12", 14" dargestellt.

In der ersten Variante des Strukturelementes 12, 14 gemäss Fig. 3b wird der flexible Überstand 18 stärker verbogen als in der zweiten Variante des Strukturelementes 12', 14' gemäss Fig. 3c, und in der dritten Variante des Strukturelementes 12", 14" wird der flexible Überstand 18 gar nicht verbogen. Das beispielhaft dargestellte Dämmelement 16 ermöglicht es in allen drei Varianten des Strukturelementes 12, 12', 12", 14, 14', 14" eine zuverlässige Abschottung des Bereichs zwischen dem Strukturelement 12, 12', 12", 14, 14', 14" und dem Trägerelement 11 zu gewährleisten. Somit kann ein solches Dämmelement 16 in verschiedenen Hohlräumen beziehungsweise Strukturelementen von Fahrzeugen eingesetzt werden, ohne dass dabei das Dämmelement 16 verändert bzw. angepasst werden muss.

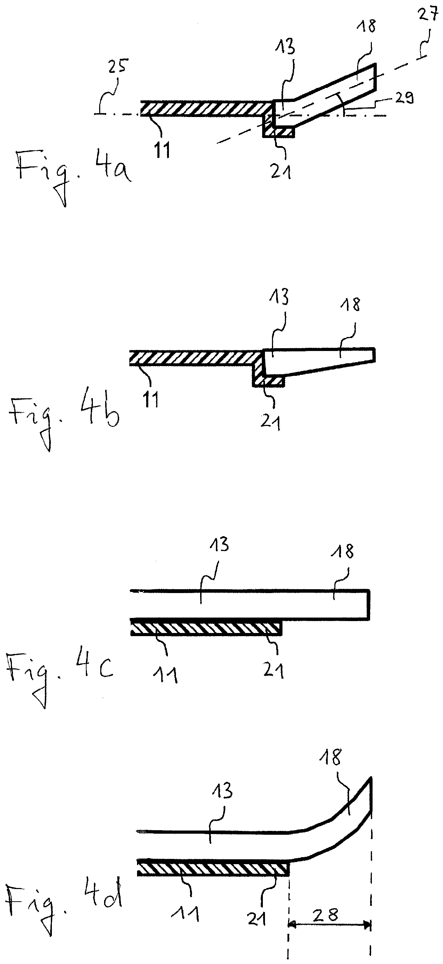

In den Fig. 4a bis 4d sind beispielhafte Ausführungsvarianten des flexiblen Überstandes 18 dargestellt. Dabei ist in den Fig. 4a und 4b das expandierbare Material 13 lediglich in einem Randbereich 21 des Trägerelementes 11 angeordnet, wobei in den Ausführungsbeispielen gemäss den Fig. 4c und 4d das expandierbare Material 13 weitere Teile des Trägerelementes 11 bedeckt. Zudem unterscheiden sich die Ausführungsbeispiele im Querschnitt des flexiblen Überstandes 18, sowie dessen Ausrichtung im Raum.

In Fig. 4a ist der Überstand 18 abgewinkelt ausgebildet. Dabei bildet eine Ebene des Überstandes 27 einen Winkel 29 mit der Ebene 25 des Trägerelementes 11. In diesem Ausführungsbeispiel beträgt dieser Winkel ungefähr 30°.

In Fig. 4b ist eine weitere Ausführungsvariante des Überstandes 18 schematisch dargestellt. In diesem Ausführungsbeispiel erstreckt sich der Überstand 18 im Wesentlichen in der Ebene 25 des Trägerelementes 11. Ein Querschnitt des Überstandes 18 ist dabei trapezförmig ausgebildet. Dadurch kann beispielsweise eine höhere Flexibilität des Überstandes 18 erreicht werden.

In Fig. 4c ist eine weitere Ausführungsvariante des Überstandes 18 schematisch dargestellt. In diesem Ausführungsbeispiel erstreckt sich der Überstand 18 wiederum in der Ebene des Trägerelementes 11. Der Überstand 18 ist in diesem Ausführungsbeispiel mit einem rechteckigen Querschnitt ausgebildet, wobei eine Dicke des expandierbaren Materials 13 konstant gehalten und im Überstand 18 fortgesetzt ist.

In Fig. 4d ist eine weitere Ausführungsvariante eines Überstandes 18 schematisch dargestellt. In diesem Ausführungsbeispiel, ähnlich wie im Ausführungsbeispiel gemäss Fig. 4a, ist der Überstand 18 wiederum geneigt zur Ebene des Trägerelementes 11 ausgebildet. In diesem Ausführungsbeispiel ist der Überstand 18 zudem bogenförmig ausgeführt. Dies hat den Vorteil, dass dadurch eine weitere Verbiegung des Überstandes 18 zwecks Anpassung an ein bestimmtes Strukturelement erleichtert wird. Eine Länge 28 des Überstandes erstreckt sich dabei entlang einer Ebene des Trägerelementes 11.

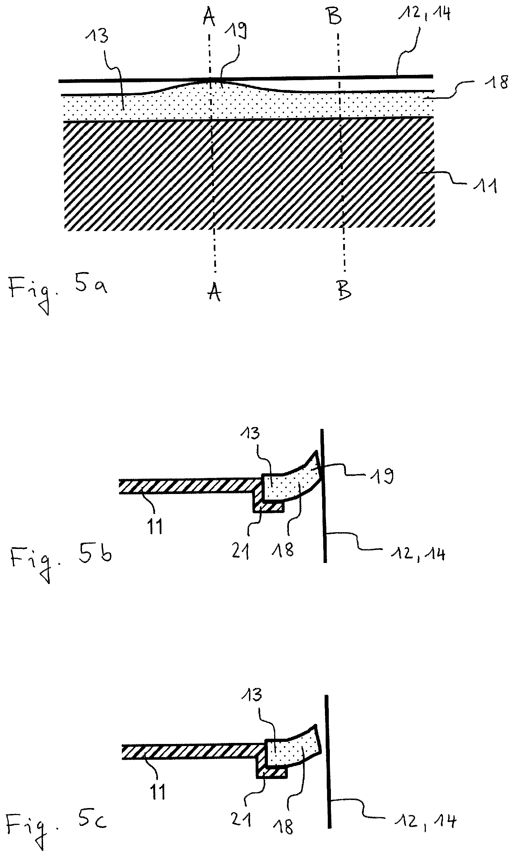

In den Fig. 5a bis 5c ist ein Ausschnitt eines Dämmelementes in einem Strukturelement 12, 14 schematisch dargestellt. In diesem Ausführungsbeispiel hat das expandierbare Material 13 des flexiblen Überstandes 18 einen Vorsprung 19. Dieser Vorsprung 19 dient der Abstützung des Überstandes 18 an dem Strukturelement 12, 14.

In den Fig. 5b und 5c sind jeweils Schnitte aus der Fig. 5a dargestellt. Dabei zeigt Fig. 5b den Schnitt A-A, und Fig. 5c zeigt den Schnitt aus Fig. 5a entlang der Linie B-B. Dabei wird ersichtlich, dass der Überstand 18 lediglich über den Vorsprung 19 am Strukturelement 12, 14 abgestützt ist, und dass ansonsten ein Spalt zwischen Überstand 18 und Strukturelement 12, 14 vorliegt. Dieser Spalt ermöglicht eine möglichst vollständige Beschichtung des Strukturelementes 12, 14 vor der Expansion des expandierbaren Elementes 13.

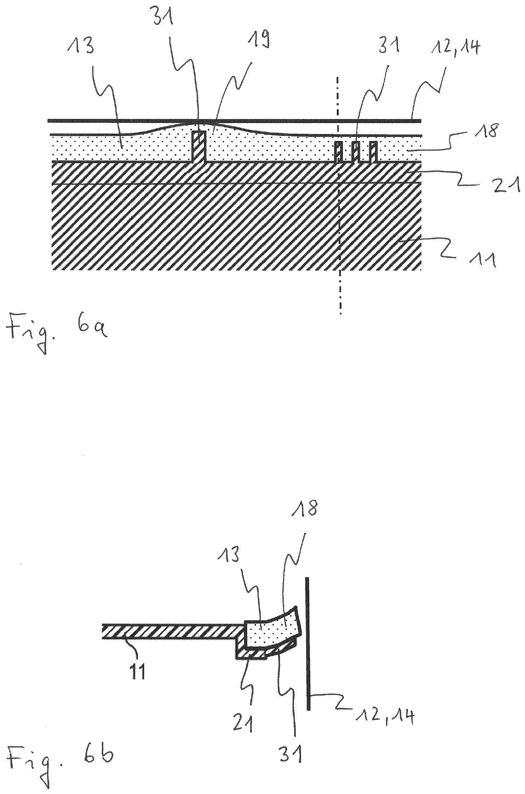

In den Figuren 6a und 6b ist ein Ausschnitt eines Dämmelementes in einem Strukturelement 12, 14 schematisch dargestellt. Dabei zeigt Figur 6a eine Ansicht einer Unterseite des Dämmelementes, wobei ein Teil des expandierbaren Materiales 13 hinter dem Randbereich 21 des Trägerelementes 11 liegt und daher in dieser Ansicht nicht sichtbar ist. Figur 6b zeigt einen Schnitt entlang der in Figur 6a dargestellten Schnittlinie durch das Dämmelement im Strukturelement.

In diesem Ausführungsbeispiel gemäss den Figuren 6a und 6b hat das Trägerelement 11 mehrere Rippen 31, welche sich in dieselbe Richtung vom Randbereich 21 des Trägerelementes 11 erstreckt, in welche das expandierbare Material 13 zur Bildung des flexiblen Überstand 18 ebenfalls über den Randbereich 21 des Trägerelementes 11 hinausragt, sodass die Rippen 31 den flexiblen Überstand 18 abstützen.

Wie in Figur 6a beispielhaft dargestellt, kann eine Rippe 31 den flexiblen Überstand 18 an einer Stelle abstützen, an welcher das expandierbare Material 13 einen Vorsprung 19 ausbildet. Andererseits kann eine Rippe 31 den flexiblen Überstand 18 auch an einer Stelle abstützen, an welcher das expandierbare Material 13 keinen Vorsprung 19 ausbildet, wie dies beispielhaft mit drei nebeneinander angeordneten Rippen 31 dargestellt ist.

Die Rippen 31 können dabei jeweils einzeln oder nebeneinander angeordnet sein, wie dies ebenfalls in Figur 6a beispielhaft dargestellt ist.

### Expandierbare (schäumbare) Materialien

Als expandierbares Material kann grundsätzlich jedes beliebige Material eingesetzt werden, das kontrolliert zur Schäumung gebracht werden kann. Dieses Material kann dabei Verstärkungseigenschaften aufweisen oder auch nicht. Typischerweise wird das schäumbare Material thermisch, durch Feuchtigkeit oder durch elektromagnetische Strahlung geschäumt.

Ein solches expandierbares Material weist typischerweise ein chemisches oder ein physikalisches Treibmittel auf. Chemische Treibmittel sind organische oder anorganische Verbindungen, welche sich unter Einfluss von Temperatur, Feuchtigkeit, oder elektromagnetischer Strahlung zersetzen, wobei mindestens eines der Zersetzungsprodukte ein Gas ist. Als physikalische Treibmittel können beispielsweise Verbindungen eingesetzt werden, welche bei Erhöhung der Temperatur in den gasförmigen Aggregatszustand übergehen. Dadurch sind sowohl chemische als auch physikalische Treibmittel in der Lage, Schaumstrukturen in Polymeren zu erzeugen.

Bevorzugt wird das expandierbare Material thermisch geschäumt wobei chemische Treibmittel eingesetzt werden. Als chemische Treibmittel eignen sich beispielsweise Azodicarbonamide, Sulfohydrazide, Hydrogencarbonate oder Carbonate.
Geeignete Treibmittel sind beispielsweise auch kommerziell erhältlich unter dem Handelsnamen Expancel® von der Firma Akzo Nobel, Niederlande, oder unter dem Handelsnamen Celogen® von der Firma Chemtura Corp., USA.
Die für die Schäumung erforderliche Wärme kann durch externe oder durch interne Wärmequellen, wie einer exothermen chemischen Reaktion, eingebracht werden. Das schäumbare Material ist vorzugsweise bei einer Temperatur von ≤ 160 °C, insbesondere von 80 °C bis 150 °C, bevorzugt von 90 °C bis 140 °C, schäumbar.

Als expandierbare Materialien geeignet sind beispielsweise einkomponentige bei Raumtemperatur nicht fliessende Epoxidharzsysteme, welche insbesondere eine erhöhte Schlagzähigkeit aufweisen und Thixotropiermittel wie Aerosile oder Nanoclays enthalten. Beispielsweise weisen derartige Epoxidharzsysteme 20 bis 50 Gew.-% eines Epoxid-Füssigharzes, 0 bis 30 Gew.-% eines Epoxid-Festharzes, 5 bis 30 Gew.-% Zähigkeitsmodifikatoren, 1 bis 5 Gew.-% physikalische oder chemische Triebmittel, 10 bis 40 Gew.-% Füllstoffe, 1 bis 10 Gew.-% Thixotropiermittel und 2 bis 10 Gew.-% hitzeaktivierbare Härter auf. Als Zähigkeitsmodifikatoren eignen sich reaktive Flüssigkautschuke auf Basis von Nitrilkautschuk oder Derivate von Polyetherpolyol-Polyurethanen, Core-Shell Polymere und ähnliche dem Fachmann bekannte Systeme.

Ebenfalls geeignete expandierbare Materialien sind Treibmittel enthaltende einkomponentige Polyurethanzusammensetzungen, aufgebaut aus kristallinen, OH-Gruppen aufweisenden Polyestern im Gemisch mit weiteren Polyolen, vorzugsweise Polyetherpolyolen, und Polyisocyanaten mit blockierten Isocyanatgruppen. Der Schmelzpunkt des kristallinen Polyesters sollte ≥ 50 °C sein. Die Isocyanatgruppen des Polyisocyanats können beispielsweise mit Nucleophilen wie Caprolactam, Phenolen oder Benzoxalonen blockiert sein. Weiterhin eignen sich blockierte Polysocyanate wie sie beispielsweise in der Pulverlacktechnologie zum Einsatz kommen und beispielsweise unter den Handelsnamen Vestagon® BF 1350 und Vestagon® BF 1540 kommerziell erhältlich sind von Degussa GmbH, Deutschland. Als Isocyanate sind ebenfalls so genannte verkapselte oder oberflächendeaktivierte Polyisocyanate, welche dem Fachmann bekannt und beispielsweise beschreiben sind in EP 0 204 970.

Weiterhin eignen sich als expandierbare Materialien Treibmittel enthaltende zweikomponentige Epoxid/Polyurethan-Zusammensetzungen, wie sie beispielsweise beschrieben sind in WO 2005/080524 A1.

Weiterhin eignen sich als expandierbare Materialien Treibmittel enthaltende Ethylen-Vinyl-Acetat-Zusammensetzungen.

Ebenfalls geeignete expandierbare Materialien werden beispielsweise unter dem Handelsnamen SikaBaffle® 240, SikaBaffle® 250 oder SikaBaffle® 255 von der Sika Corp., USA, vertrieben und sind in den Patenten US 5,266,133 und US 5,373,027 beschrieben. Solche expandierbaren Materialien sind für die vorliegende Erfindung besonders bevorzugt.
Als expandierbare Materialien mit Verstärkungseigenschaften sind beispiels-weise diejenigen bevorzugt, welche unter dem Handelsnamen SikaReinforcer® 941 von der Sika Corp., USA, vertrieben werden. Diese sind beschrieben in US 6,387,470.

### Trägermaterial

Das Trägerelement kann aus beliebigen Materialien bestehen. Bevorzugte Materialien sind Kunststoffe, insbesondere Polyurethane, Polyamide, Polyester und Polyolefine, bevorzugt hochtemperaturbeständige Polymere wie Poly(phenylenether), Polysulfone oder Polyethersulfone, welche insbesondere auch geschäumt sind; Metalle, insbesondere Aluminium und Stahl; oder gewachsene organische Materialien, insbesondere Holz- oder andere (gepresste) Faserwerkstoffe oder glasartige oder keramische Materialien; speziell auch geschäumte Materialien dieser Art; oder beliebige Kombinationen dieser Materialien. Besonders bevorzugt wird Polyamid, insbesondere Polyamid 6, Polyamid 6,6, Polyamid 11, Polyamid 12 oder ein Gemisch davon verwendet.

Weiterhin kann das Trägerelement einen beliebigen Aufbau und eine beliebige Struktur aufweisen. Es kann beispielsweise massiv, hohl, oder geschäumt sein oder eine gitterartige Struktur aufweisen. Die Oberfläche des Trägerelements kann typischerweise glatt, rau oder strukturiert sein.

Bei erfindungsgemässen Abdichtungs- und Verstärkungselementen, bei welchen sich das expandierbare Material auf einem Trägerelement befindet, unterscheidet sich das Herstellungsverfahren dementsprechend, ob das Trägerelement aus einem durch Spritzguss verarbeitbaren Material besteht oder nicht. Ist dies der Fall, wird üblicherweise ein Zweikomponenten-Spritzgussverfahren eingesetzt. Dabei wird zuerst eine erste Komponente, in diesem Fall das Trägerelement, gespritzt. Nach Erstarren dieser ersten Komponente wird die Kavität im Werkzeug vergrössert, bzw. angepasst, oder der hergestellte Spritzling wird in ein neues Werkzeug gelegt, und eine zweite Komponente, in diesem Fall das expandierbare Material, wird mit einem zweiten Spritzaggregat an die erste Komponente angespritzt.

Besteht das Trägerelement aus einem Material, welches sich nicht durch das Spritzgussverfahren herstellen lässt, also beispielsweise aus einem Metall, wird das Trägerelement in ein entsprechendes Werkzeug gelegt und das expandierbare Material wird an das Trägerelement angespritzt. Selbstverständlich besteht auch die Möglichkeit das expandierbare Material durch spezielle Befestigungsmittel oder -verfahren an dem Trägerelement zu befestigen.

## Patentansprüche

1. Dämmelement (16) zur Dämmung eines Strukturelementes (12, 14) in einem Fahrzeug, das Dämmelement (16) umfassend
ein Trägerelement (11) mit einem Randbereich (21)
und ein expandierbares Material (13), welches zumindest auf dem Randbereich (21) auf dem Trägerelement (11) angeordnet ist,
wobei das expandierbare Material (13) in zumindest einer Richtung über den Randbereich (21) des Trägerelementes (11) hinausragt, so dass das expandierbare Material (13) in diese zumindest eine Richtung einen flexiblen Überstand (18) bildet, **dadurch gekennzeichnet, dass** das Trägerelement (11) zumindest eine Rippe (31) hat, welche sich in diese zumindest eine Richtung vom Randbereich (21) des Trägerelementes (11) erstreckt, sodass die zumindest eine Rippe (31) den flexiblen Überstand (18) abstützt.

2. Dämmelement (16) nach Anspruch 1, wobei eine Länge (28) des Überstandes (18), gemessen entlang einer Ebene (25) des Trägerelementes (11), zwischen 5 und 50 mm, bevorzugt zwischen 5 und 30 mm, besonders bevorzugt zwischen 10 und 20 mm beträgt, und/oder wobei eine Dicke (26) des Überstandes (18), gemessen senkrecht zur Ebene (25) des Trägerelementes (11), zwischen 2 und 20 mm, bevorzugt zwischen 3 und 15 mm, besonders bevorzugt zwischen 3 und 10 mm beträgt.

3. Dämmelement (16) nach einem der vorhergehenden Ansprüche, wobei sich der Überstand (18) im Wesentlichen in der Ebene (25) des Trägerelementes (11) erstreckt.

4. Dämmelement (16) nach einem der Ansprüche 1 bis 2, wobei sich der Überstand (18) in einer Ebene (27) erstreckt, welche einen Winkel (29) zur Ebene (25) des Trägerelementes (11) bildet.

5. Dämmelement (16) nach Anspruch 4, wobei der Winkel (29) zwischen 10 und 80°, bevorzugt zwischen 20 und 70°, besonders bevorzugt zwischen 30 und 60° beträgt.

6. Dämmelement (16) nach einem der vorhergehenden Ansprüche, wobei der Überstand (18) einen rechteckigen, einen trapezförmigen, einen dreieckigen, einen unregelmässig geformten, einen konvexen oder einen konkaven Querschnitt hat.

7. Dämmelement (16) nach einem der vorhergehenden Ansprüche, wobei sich der Überstand (18) in einer Achse senkrecht zur Ebene (25) des Trägerelementes (11) nur oberhalb des Randbereichs (21), über welchen der Überstand (18) hinausragt, erstreckt.

8. Dämmelement (16) nach einem der vorhergehenden Ansprüche, wobei der Überstand (18) zumindest einen Vorsprung (19) zur Abstützung am Strukturelement (12, 14) hat.

9. Dämmelement nach Anspruch 8, wobei der Vorsprung (19) als bogenförmige Ausbuchtung ausgebildet ist.

10. System mit einem Strukturelement (12, 14) und einem darin angeordneten Dämmelement (16) nach einem der Ansprüche 1 bis 9.

11. System nach Anspruch 10, wobei sich der flexible Überstand (18) des Dämmelements (16) an zumindest einer Stelle am Strukturelement (12, 14) abstützt, und wobei der Überstand (18) dadurch verbogen ist.

12. System nach einem der Ansprüche 10 oder 11, wobei der Überstand (18) zumindest einen Vorsprung (19) zur Abstützung am Strukturelement (12, 14) hat, und wobei der Überstand (18) nur über diesen Vorsprung (19) am Strukturelement (12, 14) abgestützt ist.

13. System nach Anspruch 12, wobei eine Berührung zwischen Vorsprung (19) und Strukturelement (12, 14) im Wesentlichen tangential und/oder punktuell ist.

14. System nach einem der Ansprüche 12 oder 113, wobei ein Spalt zwischen Überstand (18) und Strukturelement (12, 14) in einem Bereich, in welchem der Überstand (18) nicht am Strukturelement (12, 14) abgestützt ist, zwischen 1 und 5 mm, bevorzugt zwischen 2 und 4 mm, beträgt.

## Claims

1. Insulating element (16) for insulating a structural element (12, 14) in a vehicle, said insulating element (16) comprising:
a carrier element (11) having a peripheral region (21); and
an expandable material (13) which is disposed at least on the peripheral region (21) on the carrier element (11), **characterized in that**
the expandable material (13) in at least one direction protrudes beyond the peripheral region (21) of the carrier element (11) such that the expandable material (13) in said at least one direction forms a flexible projection (18), **characterized in that** the carrier element (11) has at least one rib (31) which in said at least one direction extends from the peripheral region (21) of the carrier element (11) such that the at least one rib (31) supports the flexible projection (18).

2. Insulating element (16) according to Claim 1, wherein a length (28) of the projection (18) measured along a plane (25) of the carrier element (11) is between 5 and 50 mm, preferably between 5 and 30 mm, particularly preferably between 10 and 20 mm, and/or wherein a thickness (26) of the projection (18) measured perpendicularly to the plane (25) of the carrier element (11) is between 2 and 20 mm, preferably between 3 and 15 mm, particularly preferably between 3 and 10 mm.

3. Insulating element (16) according to one of the preceding claims, wherein the projection (18) extends substantially in the plane (25) of the carrier element (11).

4. Insulating element (16) according to one of Claims 1 to 2, wherein the projection (18) extends in a plane (27) which forms an angle (29) in relation to the plane (25) of the carrier element (11).

5. Insulating element (16) according to Claim 4, wherein the angle (29) is between 10 and 80°, preferably between 20 and 70°, particularly preferably between 30 and 60°.

6. Insulating element (16) according to one of the preceding claims, wherein the projection (18) has a rectangular, a trapezoidal, a triangular, an irregularly shaped, a convex, or a concave cross section.

7. Insulating element (16) according to one of the preceding claims, wherein the projection (18) in an axis perpendicular to the plane (25) of the carrier element (11) extends only above the peripheral region (21) beyond which the projection (18) protrudes.

8. Insulating element (16) according to one of the preceding claims, wherein the projection (18) has at least one protrusion (19) for support on the structural element (12, 14).

9. Insulating element according to Claim 8, wherein the protrusion (19) is configured as an arcuate convexity.

10. System having a structural element (12, 14) and an insulating element (16) according to one of Claims 1 to 9 disposed therein.

11. System according to Claim 10, wherein the flexible projection (18) of the insulating element (16) is supported on the structural element (12, 14) in at least one location, and wherein the projection (18) is bent on account thereof.

12. System according to either of Claims 10 and 11, wherein the projection (18) has at least one protrusion (19) for support on the structural element (12, 14), and wherein the projection (18) is supported on the structural element (12, 14) only by way of said protrusion (19).

13. System according to Claim 12, wherein any contact between the protrusion (19) and the structural element (12, 14) is substantially tangential and/or punctiform.

14. System according to either of Claims 12 and 113, wherein a gap between the projection (18) and the structural element (12, 14) in a region in which the projection (18) is not supported on the structural element (12, 14) is between 1 and 5 mm, preferably between 2 and 4 mm.

## Revendications

1. Elément d'isolation (16) pour isoler un élément structurel (12, 14) dans un véhicule, l'élément d'isolation (16) comprenant
un élément de support (11) doté d'une zone marginale (21),
et un matériau expansible (13) qui est disposé au moins dans la zone marginale (21) sur l'élément de support (11),
dans lequel l'élément expansible (13) fait saillie dans au moins une direction au-delà de la zone marginale (21) de l'élément de support (11) de sorte que le matériau expansible (13) forme un débordement flexible (18) dans cette au moins une direction, **caractérisé en ce que** l'élément de support (11) présente au moins une nervure (31) qui s'étend dans cette au moins une direction à partir de la zone marginale (21) de l'élément de support (11) de sorte que ladite au moins une nervure (31) soutient le débordement flexible (18).

2. Elément d'isolation (16) selon la revendication 1, dans lequel une longueur (28) du débordement (18), mesurée le long d'un plan (25) de l'élément de support (11), mesure entre 5 et 50 mm, de préférence entre 5 et 30 mm, de manière particulièrement préférée entre 10 et 20 mm, et/ou dans lequel une épaisseur (26) du débordement (18), mesurée perpendiculairement au plan (25) de l'élément de support (11), mesure entre 2 et 20 mm, de préférence entre 3 et 15 mm, de manière particulièrement préférée entre 3 et 10 mm.

3. Elément d'isolation (16) selon l'une quelconque des revendications précédentes, dans lequel le débordement (18) s'étend substantiellement dans le plan (25) de l'élément de support (11).

4. Elément d'isolation (16) selon l'une quelconque des revendications 1 et 2, dans lequel le débordement (18) s'étend dans un plan (27) qui forme un angle (29) avec le plan (25) de l'élément de support (11).

5. Elément d'isolation (16) selon la revendication 4, dans lequel l'angle (29) mesure entre 10 et 80°, de préférence entre 20 et 70°, de manière particulièrement préférée entre 30 et 60°.

6. Elément d'isolation (16) selon l'une quelconque des revendications précédentes, dans lequel le débordement (18) présente une section transversale rectangulaire, trapézoïdale, triangulaire, de forme irrégulière, convexe ou concave.

7. Elément d'isolation (16) selon l'une quelconque des revendications précédentes, dans lequel le débordement (18) s'étend dans un axe perpendiculaire au plan (25) de l'élément de support (11) uniquement au-dessus de la zone marginale (21) de laquelle le débordement (18) fait saillie.

8. Elément d'isolation (16) selon l'une quelconque des revendications précédentes, dans lequel le débordement (18) présente au moins une saillie (19) pour prendre appui sur l'élément structurel (12, 14).

9. Elément d'isolation selon la revendication 8, dans lequel la saillie (19) est réalisée sous la forme d'une courbure en forme d'arc.

10. Système comprenant un élément structurel (12, 14) et un élément d'isolation (16) disposé dans celui-ci selon l'une quelconque des revendications 1 à 9.

11. Système selon la revendication 10, dans lequel le débordement flexible (18) de l'élément d'isolation (16) prend appui en au moins un endroit sur l'élément structurel (12, 14), et le débordement (18) étant déformé de ce fait.

12. Système selon l'une quelconque des revendications 10 et 11, dans lequel le débordement (18) présente au moins une saillie (19) pour prendre appui sur l'élément structurel (12, 14), et dans lequel le débordement (18) n'est soutenu que par cette saillie (19) sur l'élément structurel (12, 14).

13. Système selon la revendication 12, dans lequel un contact entre la saillie (19) et l'élément structurel (12, 14) est substantiellement tangentiel et/ou ponctuel.

14. Système selon l'une quelconque des revendications 12 et 113, dans lequel une fente entre le débordement (18) et l'élément structurel (12, 14) mesure entre 1 et 5 mm, de préférence entre 2 et 4 mm, dans une zone où le débordement (18) n'est pas soutenu sur l'élément structurel (12, 14).
